# EUROPÄISCHE PATENTSCHRIFT

(11) **EP 0 408 514 B1**
(45) Veröffentlichungstag und Bekanntmachung des Hinweises auf die Patenterteilung: **22.03.1995**
(21) Anmeldenummer: 90810528.1
(22) Anmeldetag: 12.07.1990
(51) Int. Cl.: H02G 3/12, H02G 3/08

(54) **Einbaudosen für elektrische Installationen**
Flush-mounted electrical installation boxes
Boîtes encastrées pour installations électriques

(30) Priorität: 14.07.1989 CH 2655/89; 17.10.1989 CH 3775/89
(43) Veröffentlichungstag der Anmeldung: 16.01.1991
(73) Patentinhaber: Schwarz, Günter, CH-8804 Au ZH (CH)
(72) Erfinder: Schwarz, Günter, CH-8804 Au (CH); Salzgeber, Heinz, CH-8046 Zürich (CH)
(74) Vertreter: Quehl, Horst Max, Dipl.-Ing.

(56) Entgegenhaltungen:
- DE-A- 2 539 299
- DE-A- 3 536 623

## Beschreibung

Die Erfindung betrifft Einbaudosen für elektrische Installationen entsprechend dem Oberbegriff des Anspruchs 1.

Einbaudosen dieser Art sind bekannt durch die DE-A-2 539 299. Diese Dosen werden mit an ihr vorgesehenen Rastnasen in einer c-profilförmigen metallischen Mittelschiene eines Installationskanals verrastet und durch nachträglich an den Rastnasen eingesetzte Keile in Rastposition gehalten. Das jeweilige Ausrichten der Dosen zueinander erfordert die Einhaltung eines Abstandsmasses durch Hilsmittel und führt somit leicht zu Ungenauigkeiten.

Derselbe Nachteil ist auch für Einbaudosen entsprechend der DE-A-3 536 623 gegeben, da auch dort der Bodenteil einer zweiteiligen Dose mit Haken in ein fortlaufend bzw. schienenartig an einer Montagewand vorgesehenes Halteprofil eingreift.

Der Erfindung liegt die Aufgabe zugrunde, eine Ausführung von Einbaudosen mit einer Richtschiene zu finden, durch die sich die Einbaudosen einfach und somit schnell und genau relativ zueinander ausrichten lassen. Die Lösung dieser Aufgabe erfolgt aufgrund der kennzeichnenden Merkmale des Patentanspruchs 1. Vorteilhafte Ausgestaltungen der Erfindung sind Gegenstand der abhängigen Patentansprüche und der folgenden Beschreibung anhand der Zeichnungen zu entnehmen. Es zeigt:
- Fig.1: eine Aufsicht auf mehrere durch eine Richtschiene miteinander verbundene Einbaudosen,
- Fig.2: eine Aufsicht auf eine Einbaudose mit teilweiser Darstellung einer mit ihr verbundenen Richtschiene,
- Fig. 3: einen Querschnitt durch die Dose nach Fig.2 entlang der Linie III-III,
- Fig.4: eine Aufsicht auf eine weitere Ausführungsform einer Einbaudose,
- Fig.5: einen Querschnitt entlang der Linie IV-IV der Fig. 4,
- Fig.6: eine Aufsicht auf eine weitere Ausführungsform einer Einbaudose mit Richtschiene,
- Fig.7: eine Querschnitt entlang der Linie VII-VII der Fig.6,
- Fig.8: eine Darstellung entsprechend Fig.7, mit einer Variante zur Ausführung der Richtschiene
- Fig.9: eine Aufsicht auf eine weitere Ausführungsform einer Einbaudose mit Richtschiene,
- Fig.10: einen Querschnitt entlang der Linie X-X der Fig.9,
- Fig.11: eine Aufsicht auf einen Teil einer Richtschiene, die für die Ausführungsbeispiele nach Fig.8 und 9 geeignet ist,
- Fig.12: eine Ansicht der Unterseite einer weiteren Ausführungsform einer Einbaudose, mit einer Richtschiene,
- Fig.13: einen Querschnitt entlang der Linie XIII-XIII der Fig.12,
- Fig.14: eine Ansicht der Unterseite einer weiteren Ausführungsform einer Einbaudose, mit einer Richtschiene,
- Fig.15: einen Querschnitt entlang der Linie XV-XV der Fig.14, mit einer durch Strichlinien angedeuteten weiteren Ausführungsform,
- Fig.16: eine Seitenansicht eines Teils der Einbaudose nach Fig.14,
- Fig.17: einen Teilquerschnitt durch eine weitere Ausführungsform einer Einbaudose, mit zugehöriger Richtschiene,
- Fig.18: einen Querschnitt entlang der Linie XVIII-XVIII der Fig.17,
- Fig.19: einen Querschnitt ähnlich Fig.18 zur Darstellung einer Variante zum Ausführungsbeispiel nach Fig.17,
- Fig.20: eine Seitenansicht eines Teils einer weiteren Ausführungsform einer Einbaudose mit Richtschiene,
- Fig.21: einen Querschnitt entlang der Linie XXI-XXI der Fig.20,
- Fig.22: einen Teilquerschnitt durch eine Standard-Einbaudose,
- Fig.23: eine Seitenansicht eines Teils einer Richtschiene mit zugehörigem Kopplungsschieber,
- Fig.24: einen Querschnitt entlang der Linie XXIII-XXIII der Fig.23,
- Fig.25: eine Ansicht der Unterseite einer weiteren Ausführungsform einer Einbaudose mit Richtschiene,
- Fig.26: einen Querschnitt entlang der Linie XXVI-XXVI der Fig.25,
- Fig.27,28: Querschnittsdarstellungen einer Standard-Einbaudose,
- Fig.29: einen Querschnitt durch eine weitere Ausführungsform eines Kopplungsschiebers,
- Fig.30: einen weiteren Querschnitt des Kopplungsschiebers nach Fig.29,
- Fig.31: eine Aufsicht auf den Kopplungsschieber nach Fig.29,30,
- Fig.32-34: eine Richtschiene für den Kopplungsschieber nach Fig.29-31 in Seitenansicht, Querschnitt und Aufsicht.
- Fig.35: eine Aufsicht auf durch eine Richtschiene miteinander verbundene Einbaudosen, entsprechend einer weiteren Ausführungsform der Erfindung und
- Fig.36: eine teilweise längsgeschnittene Seitenansicht der Anordnung nach fig.6.

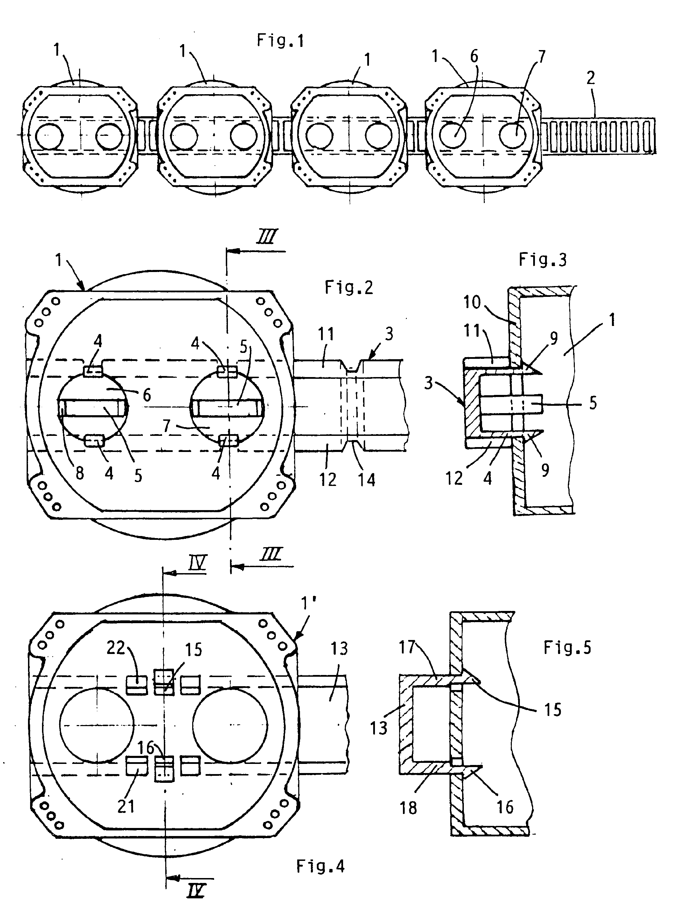

Fig.1 veranschaulicht die Ausrichtung und gegenseitige Befestigung mehrerer Standard-Einbaudosen 1 in einer Reihe auf einer gemeinsamen Richtschiene 2. Die leicht und schnell herstellbare Rastverbindung zwischen einer Richtschiene und Einbaudosen 1 ist anhand der folgenden Darstellungen in zahlreichen Varianten beispielhaft gezeigt.

Die Ausführungsbeispiele der Fig.2,3; 17,18; 22-24 und 27-31 sind für die Verwendung mit Standard-Einbaudosen 1 allgemein bekannter Ausführung vorgesehen.

Beim Ausführungsbeispiel der Fig. 2,3 sind an einer Richtschiene 3 von dieser senkrecht abstehende Fortsätze 4,5 in paarweiser Gruppierung und in fest vorgegebenen Abständen vorgesehen, die in die im Boden der Standard-Einbaudosen 1 vorbereiteten und zu diesem Zweck ausgebrochenen Kabelöffnungen 6,7 eingreifen, wobei jeweils ein Fortsatz 5 in Form eines diametral formschlüssig eingreifenden Stegteiles (5) vorgesehen ist, während die anderen Fortsätze 4 aus zwei federnden Hakenteilen (4) bestehen, die in diametraler Anordnung um 90° versetzt in dieselbe Kabelöffnung 6,7 eingerastet sind. Die äusseren Enden der Fortsätze 4,5 haben Abschrägungen 8,9, die das druckknopfartige Einrasten erleichtern. Der Dosenboden 10 stützt sich dabei auf den Profilschenkeln 11,12 der im Querschnitt u-förmigen Richtschiene 3 ab.

Das Ausführungsbeispiel der Fig.4,5 hat ebenfalls eine im Querschnitt u-förmige Richtschiene 13, jedoch sind nur jeweils zwei hakenförmige Fortsätze 15,16 vorhanden, die sich von den Profilschenkeln 17,18 wegerstrecken. Für ihren Eingriff in den Boden 19 der Einbaudose 1′ sind in diesem jeweils Paare von viereckigen Aussparungen 21,22 nebeneinander angeordnet, so dass die Position der Einbaudosen 1′ relativ zu den Fortsätzen 15,16 der Richtschiene verschieden gewählt werden kann.

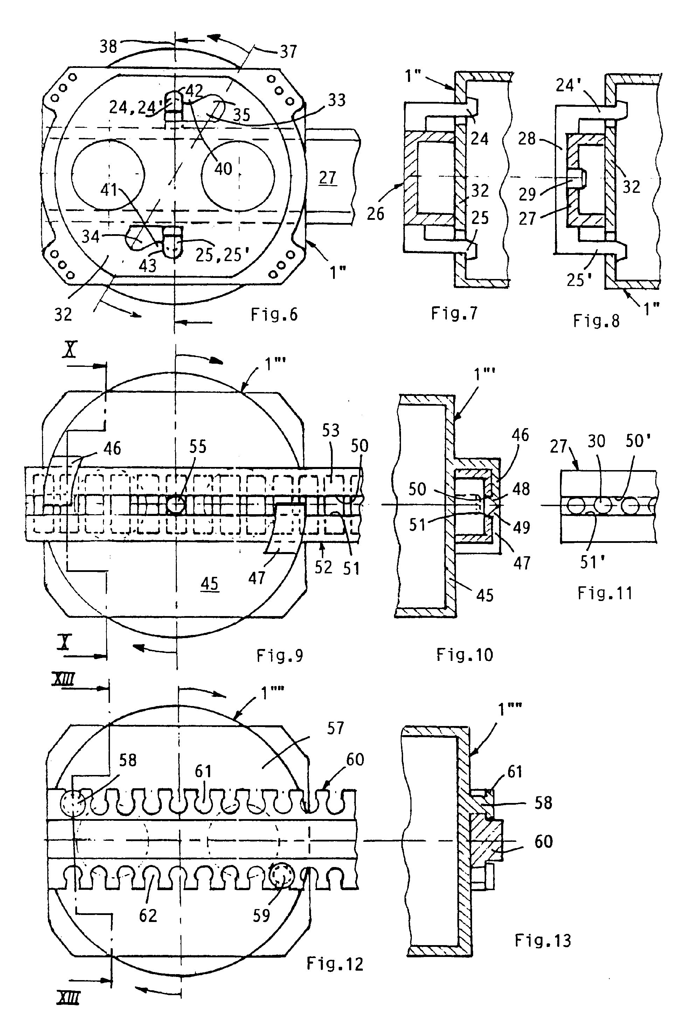

Beim Ausführungsbeispiel der Fig.6 bis 8 wird die jeweilige Einbaudose 1˝ durch eine Drehbewegung mit federnd ausbiegbaren Verriegelungsfortsätzen 24,25; 24′,25′ verriegelt. Diese sind entweder gemäss Fig.7 seitlich an der Richtschiene 26 angeformt oder sie bilden gemäss Fig.8 einen Teil eines drehfest an der im Querschnitt u-förmigen Richtschiene 27 befestigten Verriegelungsbügels 28. Letztere Ausführungsform hat den Vorteil, dass an der Richtschiene 27 für jede Einbaudose 1˝ nur ein Paar von Verriegelungsfortsätzen 24′,25′, bzw. ein Verriegelungsbügel 28 vorzusehen ist und dennoch zahlreiche Positionen an der Richtschiene 27 möglich sind, indem ein zentraler Verankerungszapfen 29 des Verriegelungsbügels 28 in einem Loch 30 einer gemäss Fig.11 vorgesehenen Lochreihe der Richtschiene 27 in der gewünschten Position verankert wird. Für die Herstellung der Verriegelung befinden sich im Boden 32 der Einbaudose 1˝ zwei Eingriffsöffnungen 33,34 mit jeweils einer radial grösseren Aufnahmeerweiterung 35, 36, die diametral zueinander angeordnet sind, so dass sich die Einbaudose 1˝ in einer verdrehten Ausgangsposition auf die Verriegelungsfortsätze 24,25 oder 24′,25′ aufstecken lässt, in der die Strichlinie 37 sich in der Position der sich senkrecht zu der Richtschiene 27 erstreckenden Strichlinie 38 befindet. Eine anschliessende Verdrehung der Einbaudose 1˝ um den Winkel zwischen diesen beiden Strichlinien 37,38 führt dazu, dass die Verriegelungsfortsätze an einer radial einwärts gerichteten Verengung 40, 41 der Eingriffsöffnungen 33,34 federnd nach innen gebogen werden, um anschliessend in der dargestellten Position in einer Rasterweiterung 42,43 einzurasten, in der sie unter radialer Vorspannung verbleiben.

Beim Ausführungsbeispiel nach Fig.9,10 erfolgt die Verriegelung der Einbaudose 1‴ ebenfalls durch eine Drehbewegung. Dabei schnappen zwei am Umfang des Dosenbodens 45 angeformte Klauen 46,47 mit ihrem federnden Hakenfortsatz 48,49 jeweils über eine Kante 50,51; 50′,51′ einer im Querschnitt u-förmigen Richtschiene 52 oder 27 ein. Die hierfür geigneten Richtschienen 27 oder 52 haben ausserdem reihenförmig angeordnete Aussparungen 30,53, die z.B. kreisrund (Fig.11) oder rechteckförmig (Fig.9) ausgeführt sind und der Aufnahme eines zentral am Dosenboden 45 angeformten Zapfens 55 dienen, um den die drehende Verriegelungsbewegung ausgeführt wird.

Beim Ausführungsbeispiel nach Fig.12,13 sind statt der Klauen 46, 47 am Aussenumfang des Dosenbodens 57 zwei Verriegelungszapfen 58,59 mit einem die Richtschiene 60 übergreifenden Kopf 61 angeformt. Diese sind zum Einrasten in c-förmige, in zwei Reihen aussen an der Richtschiene 60 eingeformte Verriegelungsaussparungen 61,62 vorgesehen. Ein die Längsposition an der Richtschiene fixierendes Zusatzorgan, wie beispielweise der Zapfen 55 kann somit an der Einbaudose 1′′′′ vermieden werden.

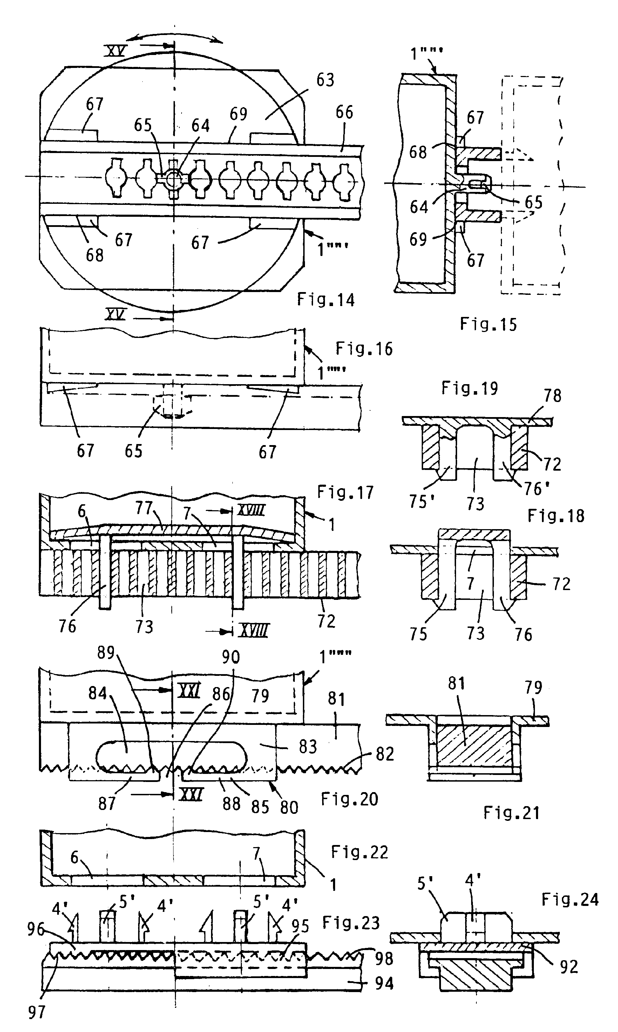

Ein drittes Ausführungsbeispiel für eine Verdrehverriegelung der Einbaudose 1′′′′′ ist in Fig.14 bis 16 dargestellt. Dabei wird eine zentral am Dosenboden 63 angeformter Verriegelungszapfen 64 mit einem stegförmigen Zapfenkopf 65 in einer von reihenförmig an der Richtschiene 66 vorgesehenen und der Form des Zapfenkopfes 65 entsprechenden Aussparungen 67 durch eine Drehbewegung verriegelt, bei der gleichzeitig am Aussenumfang des Dosenbodens 63 angeformte keilförmige Stege 67 über die Begrenzungskanten 68,69 der Richtschiene 66 einrasten. Die im Querschnitt u-förmige Richtschiene 66 kann zusätzlich hakenförmige Fortsätze 15,16 aufweisen, um sie wahlweise mit einer Einbaudose 1′ entsprechend dem Ausführungsbeispiel nach Fig.4,5 verwenden zu können.

Die Richtschiene 72 für das Ausführungsbeispiel nach Fig.17 bis 19 hat leiterartig reihenförmig angeordnete durchgehende Schlitze 73, in deren Enden jeweils ein Paar von hakenartigen Verankerungsfortsätzen 75,67;75′,76′ eingreift, die entweder an einem zusätzlichen Verankerungsbügel 77 oder gemäss Fig. 19 am Dosenboden 78 angeformt sind. Die Länge der Schlitze 73 der Richtschiene 72 ist dem Durchmesser der Kabellöcher 6,7 einer Standard-Einbaudose 1 angepasst, so dass die Fortsätze 75,76 an der Lochinnenwand anliegen und die Einbaudose 1 zur Richtschiene 72 spielfrei ausrichten.

Die Einbaudose 1′′′′′′ nach Fig.20,21 hat eine am Dosenboden 79 angeformte Schienenführung 80 für eine Richtschiene 81, die auf der dem Dosenboden 79 abgekehrten Seite eine Reihe von Zähnen 82 aufweist. Die Schienenführung 80 hat an ihren seitlichen Führungswänden 83 jeweils eine grössere Aussparung 84 und ihre diese verbindende Querwand 85 eine Unterbrechung 86, so dass zwei gegeneinander gerichtete Federschenkel 87,88 vorhanden sind, an deren Enden sich jeweils eine nach innen gerichtete Zahnrippe 89,90 befindet, die in eine Zahnlücke zwischen den Zähnen 82 der Richtschiene eingreift. Durch Anheben und Ausbiegen der Querwand 85 im Bereich der Unterbrechung mittels zwei Fingern lässt sich die Einbaudose 1′′′′′′ leicht auf der Richtschiene 81 in die gewünschte Arretierposition verschieben.

Fig.22 bis 24 zeigen ebenfalls ein für eine Standard-Einbaudose 1 geeignete Ausführungsform, bei der an einem Kopplungsschieber 92 eine Gruppe von Fortsätzen 4′,5′ angeformt ist, die auf gleiche Weise in die Kabellöcher 6,7 eingreifen, wie anhand der Fig.2,3 beschrieben worden ist. Der Kopplungsschieber 92 hat einen die im Querschnitt T-förmige Richtschiene 94 seitlich umschliessenden Führungsteil 95, der sich zu einer Federzunge 96 hin fortsetzt, deren gezahnter Endbereich 97 in eine Zahnreihe 98 der Richtschiene 94 federnd eingreift. Ein leichtes Anheben der Federzunge 96 erleichtert das Verschieben des Kopplungsschiebers 92 auf der Richtschiene 94 in die gewünschte Position der Einbaudose 1 relativ zu einer benachbarten Einbaudose 1.

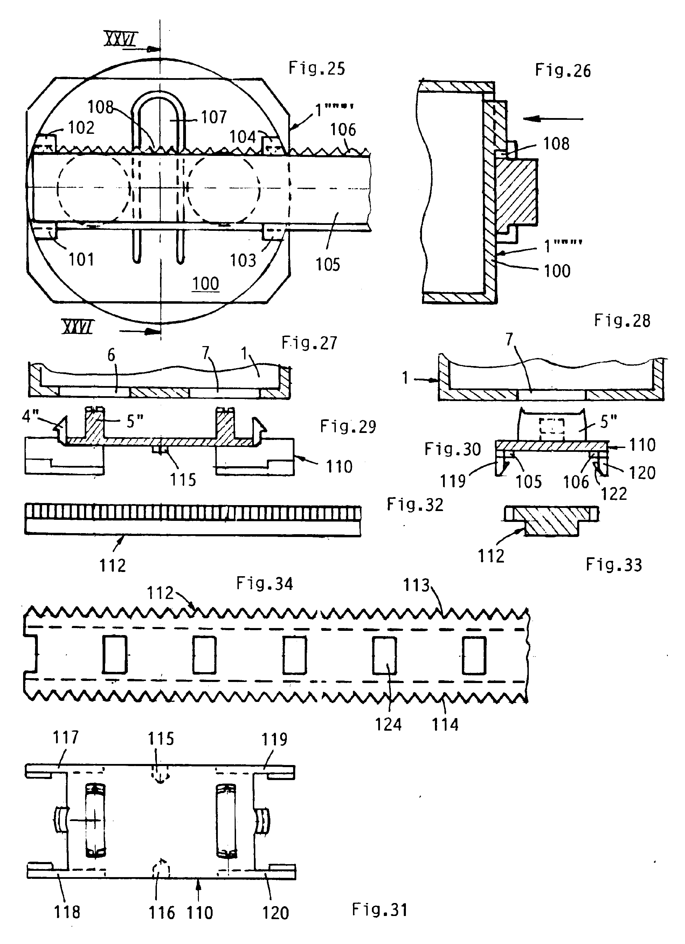

Die Einbaudose 1′′′′′′′ nach Fig. 25,26 hat an ihrem Dosenboden 100 angeformte einzelne Führungsklauen 101-104, die die im Querschnitt T-förmige Richtschiene 105 seitlich umfassen. An einer Seite der Richtschiene 105 befindet sich eine Zahnreihe 106, in die an einer federnden Zunge 107 des Dosenbodens 100 vorgesehene Zähne 108 eingreifen. Ein Druck gegen das freie Ende der Zunge 107 in Richtung des Pfeiles 109 löst den Eingriff dieser Zähne 108, so dass die Einbaudose 1′′′′′′′ auf der Richtschiene in eine gewünschte Arretierposition geschoben werden kann.

In Fig.27 bis 31 ist ein weiterers Ausführungsbeispiel mit einem Kopplungsschieber 110 dargestellt, dass für eine Standard-Einbaudose 1 geeignet ist. Aehnlich den Ausführungsbeispielen der Fig. 2,3 und Fig.22 bis 24 sind Fortsätze 4˝,5˝ vorgesehen, die in die im Dosenboden 10 ausgebrochene, vorbereitete Kabelöffnungen 6,7 eingreifen. Die Richtschiene 112 hat eine T-förmigen Querschnitt und seitliche Zahnreihen 113,114 für zwei an dem Kopplungsschieber 110 vorgesehene, gegeneinandergerichtete Arretierzähne 115, 116. An der vier Eckbereichen des Kopplungsschiebers 110 befinden sich Führungswandstücke 117-120, die mit ihren äusseren Enden den Richtschieber 112 umgreifen. Da dort innere Abschrägungen 122 vorgesehen sind, lässt sich der Kopplungsschieber 110 mit der Richtschiene 112 durch eine Einschnappbewegung verbinden, wobei auch die genannten Arretierzähne 115,116 zum Eingriff gelangen. Eine Korrektur durch Verschieben des Kopplungsschiebers 110 ist möglich, indem dessen die Arretierzähne 115, 116 aufweisender mittlerer Bereich von dem Richtschieber 112 durch Ausbiegen abgehoben wird, bis die Arretierzähne 115,116 ausser Eingriff gelangen.

In der Richtschiene 112 vorgesehene Ausschnitte 124 erleichtern ihr Durchtrennen, um sie auf eine gewünchste Länge zu kürzen. Beim Ausführungsbeispiel nach Fig.2 sind zu diesem Zweck in regelmässigen Abständen Querkerben 14 vorgesehen. Ausserdem kann eine längsgerichteten Oberfläche der Richtschienen eine masstabartige Positionierungshilfe, z.B. in Form einer Millimetereinteilung aufweisen.

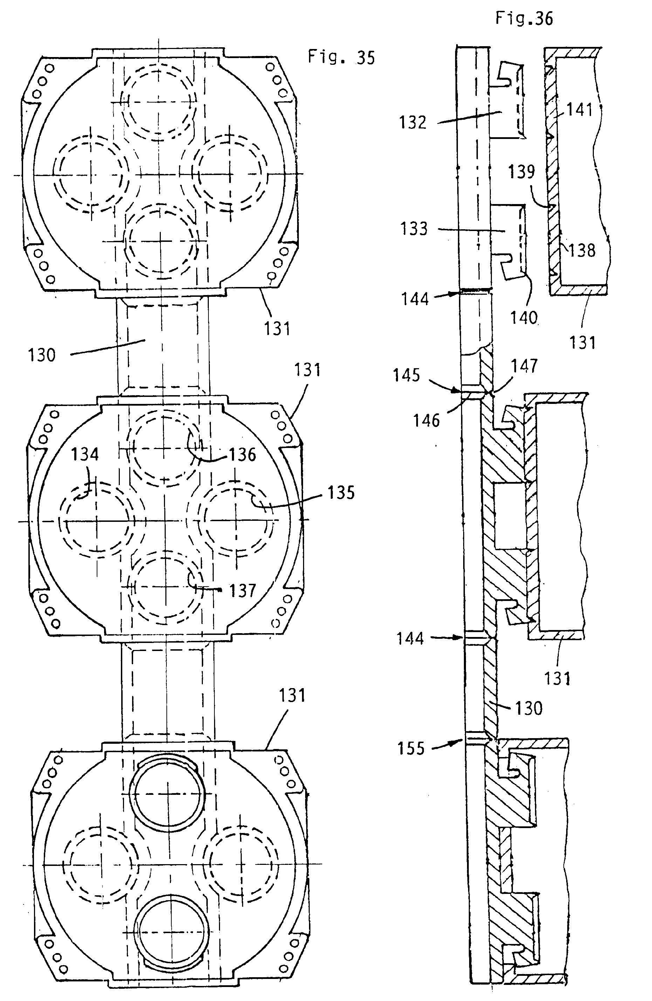

Beim Ausführungsbeispiel der Fig.35 und 36 ist an einer Richtschiene 130 in regelmässigen Abständen jeweils ein Paar von Fortsätzen 132,133 angeformt, die für den Eingriff in die üblichen beiden Kabellöcher 134,135 ausgebildet sind. In besonderer Ausführungsform haben jedoch die Einbaudosen 131 dieses Ausführungsbeispieles um 90° versetzt ein zweites Paar von Kabellöchern 136, 137, so dass die Einbaudosen auch um 90° versetzt auf der Richtschiene 130 befestigt werden können, um sie z.B. vertikal übereinander an einer Wand zu montieren. Die jeweils nicht für die Befestigung an der Richtschiene 130 verwendeten Kabellöcher 136, 137 können somit für den Anschluss nichtdargestellter kabelführender Rohre verwendet werden.

Die Kabellöcher 134-137 werden erst bei Bedarf durch Ausbrechen eines Bodenstückes 141 aus dem Boden der Einbaudosen 131 hergestellt, wofür auf der Bodenaussenseite entsprechend ihrer Form verlaufende Schwächungsrillen 139 vorgesehen sind. Das Ausbrechen kann vereinfacht mittels der Fortsätze 132, 133 selbst erfolgen, indem sie auf die auszubrechenden Bodenstücke 141 gelegt und anschliessend in die entstehenden Löcher 134,135 eingeschlagen werden. Ihre vorherige Ausrichtung zur Achse des auszubrechenden Loches sowie das Ausbrechen werden erleichtert, indem die umlaufende Aussenkante des Kopfendes der Fortsätze 132,133 als stanzmesserartiger Steg 140 ausgeführt ist, der in die jeweilige Schwächungsrille eingesetzt werden kann, wie in Fig.36 anhand der mittleren Einbaudose 131 gezeigt ist.

Die bei diesem Ausführungsbeispiel somit entsprechend den Kabellöchern 134-137 kreisrunden Kopfenden der Fortsätze 132,133 sind an einer Seite hakenartig hinterschnitten geformt und mit einer Abschrägung 142 in Form eines Teiles einer Kegelfläche versehen, so dass die Fortsätze 132,133 druckknopfartig in die Kabellöcher 134,135 einschnappen können, so dass sie die im unteren Teil der Fig.36 gezeigte Position einnehmen.

Die Richtschiene 130 hat einen u-förmigen Querschnitt. In regelmässiger Verteilung sind an ihr Sollbruchstellen 144,145 vorgesehen, derart, dass sie bei an ihr befestigten Einbaudosen 131 beidseitig an diese angrenzend angeordnet sind. Es hat sich gezeigt, dass die Richtschiene 130 sich mit geringem Kraftaufwand leicht auf das jeweils gewünschte Mass abbrechen lässt, indem an der Innenseite der beiden Querschnittsschenkel und dem diese verbindenden Steg tiefere, im Querschnitt v-förmige Schwächungsrillen 146 eingeformt sind, während an gleicher Stelle aussen sich weniger tiefe Schwächungsrillen 147 befinden. Die freien Schenkelenden sind hingegen nicht von aussen eingerillt.

## Patentansprüche

1. Einbaudosen für elektrische Installationen, mit einer die Dosen verbindenden Richtschiene, wobei an der jeweiligen Dose (1, 131) und der Richtschiene (3,13,27,52,60,66,72,81,94,105,112, 130) Rast- oder Gegenrastmittel für die verstellbare Verbindung zwischen den Dosen und der Schiene vorgesehen sind, dadurch gekennzeichnet, dass die Richtschiene (3,13,27,52,60,66, 72,81,94, 105,112,130) in ihrer Längsrichtung verlaufend wenigstens eine Reihe von in regelmässigen Abständen vorgesehenen Rastmitteln aufweist, so dass die Verriegelung der Einbaudosen an der Richtschiene in einer Vielzahl von möglichen durch die Lage der Rastmittel auf der Richtschiene fest vorgegebenen Positionen durch die federnde bzw. schnappende Zusammenwirkung der Rast- und Gegenrastmittel erfolgt.

2. Einbaudosen nach Anspruch 1, dadurch gekennzeichnet, dass im Boden der Einbaudosen (1,131) in Form von Kabellöchern (6,7;134-137) vorgesehene Aussparungen die Gegenrastmittel bilden.

3. Einbaudosen nach Anspruch 1 oder 2, dadurch gekennzeichnet, dass an der Richtschiene (3,13,27) in regelmässigen Abständen entsprechend einem möglichen Mittenabstand zwischen benachbarten Einbaudosen (1) mindestens ein federnd ausbiegbarer Fortsatz (4, 15,16,24,25,132,133) mit einem hakenförmigen Kopfende vorgesehen ist.

4. Einbaudosen nach Anspruch 2 oder 3, dadurch gekennzeichnet, dass an der Richtschiene (130) für jede Einbaudose (131) ein Paar von Fortsätzen (132,133) für den Eingriff in ein Paar von Kabellöchern (134,135) vorgesehen ist, wobei im Boden (138) der Einbaudosen (131) jeweils zwei Paare von Kabellöchern (134,135; 136, 137) derart angeordnet sind, dass die Verbindungslinie zwischen den Kabellöchern (134,135) eines Paares zu derjenigen des anderen Paares (136,137) im Winkel von 90° verläuft.

5. Einbaudosen nach einem der Ansprüche 2 bis 4, dadurch gekennzeichnet, dass die Kabellöcher (134-137) entlang von im Boden (138) der Einbaudosen (131) vorhandenen Schwächungslinien (139) ausbrechbar sind.

6. Einbaudosen nach Anspruch 5, dadurch gekennzeichnet, dass die Schwächungslinien durch auf der Aussenseite des Bodens (138) der Einbaudosen (131) vorgesehene Rillen (139) gebildet sind, wobei die Fortsätze (132,133) der Richtschiene (130) ein Kopfende aufweisen, dessen äussere, umlaufende Begrenzungskante entsprechend dem Verlauf der Schwächungslinie geformt ist.

7. Einbaudosen nach Anspruch 6, dadurch gekennzeichnet, dass das Kopfende der Fortsätze (132,133) einen von Fortsatz weggerichteten, stanzmesserartigen Rand (140) hat, der in eine eine Schwächungslinie der Einbaudose (131) bildende Rille (139) einsetzbar ist.

8. Einbaudose nach einem der Ansprüche 2 bis 7. dadurch gekennzeichnet, dass die Fortsätze (132,133) der Richtschiene (130) ein der Form der Kabellöcher (134-137) entsprechend geformtes Kopfende haben, das einseiting hakenartig hinterschnitten ist.

9. Einbaudosen nach einem der Ansprüche 1 bis 8, dadurch gekennzeichnet, dass die Richtschiene (130) einen u-förmigen Querschnitt hat und Sollbruchstellen (144,145) aufweist.

10. Einbaudose nach Anspruch 9, dadurch gekennzeichnet, dass die Sollbruchstellen der Richtschiene (130) durch Schwächungsrillen (146,147) gebildet sind, wobei an der Innenseite des Schienenprofils tiefere und an seiner Aussenseite weniger tiefe Schwächungsrillen mit v-förmigen Querschnitt vorhanden sind.

11. Einbaudosen nach Anspruch 1 oder 3, dadurch gekennzeichnet, dass für den wahlweisen Eingriff von an der Richtschiene (3,13) vorgesehenen Rastmitteln (15,16) im Boden (19) der Einbaudosen (1′) mehrere Rastgegenmittel in Form von Aussparungen (21,22) nebeneinander angeordnet sind.

12. Einbaudosen nach einem der Ansprüche 1 bis 3, dadurch gekennzeichnet, dass die an der Richtschiene (27,94,112) vorgesehen, von ihr abstehenden Rastmittel (24′,25′,4′,5′,4˝,5˝) an einer lösbar mit ihr verbundenen und in Schienenlängsrichtung verstellbar fixierten Kopplungseinrichtung (28,92,110) angeformt sind.

13. Einbaudosen nach einem der Ansprüche 1,2,3,11 oder 12 dadurch gekennzeichnet, dass in der Richtschiene (2,27,52,60,66,72) zahlreiche reihenförmig aufeinander folgende Aussparungen (30,53, 61,,67,73, 82,98,,113,114)) für den wahlweisen Eingriff von Rast- (58,59,64, 75,76) oder Arretiermitteln (29,55,89,90,97,108,115, 116) vorgesehen sind.

14. Einbaudosen nach Anspruch 12, dadurch gekennzeichnet, dass die Kopplungseinrichtung aus einem auf der Richtschiene (94,112) geführten Kopplungsschieber ((92,110) besteht.

15. Einbaudose nach Anspruch 13, dadurch gekennzeichnet, dass an den Einbaudosen (1˝˝˝) eine Schienenführung (80) mit federnden Rastmitteln (89,90) für den arretierenden Eingriff in mindestens eine Aussparung einer Reihe von Aussparungen (82) angeformt ist.

16. Einbaudosen nach Anspruch 13, dadurch gekennzeichnet, dass an den Einbaudosen (1) vorgesehene Rastmittel (75,76) an einer lösbar mit ihr verbundenen Kopplungseinrichtung (77) angeformt sind.

17. Einbaudosen nach Anspruch 1, dadurch gekennzeichnet, dass die an den Einbaudosen (1˝,1‴,1′′′′,1′′′′′) vorgesehenen Rastmittel (46, 47,58,59,67-70) oder Gegenrastmittel (34,35) am Umfangsbereich des Dosenbodens (32,45,57,63) paarweise angeordnet sind, so dass sie durch eine Drehbewegung an der Richtschiene (27,52,60,66) einrastbar sind.

## Claims

1. Flush-mounted electrical installation boxes with a guide rail connecting the boxes, in which on the particular box (1, 131) and the guide rail (3, 13, 27, 52, 60, 66, 72, 81, 94, 105, 112, 130) are provided locking or counterlocking means for the adjustable connection between the boxes and the rail, characterized in that the guide rail (3, 13, 27, 52, 60, 66, 72, 81, 94, 105, 112, 130) has in its longitudinal direction at least one row of locking means provided at regular intervals, so that the interlocking of the installation boxes on the guide rail takes place in a plurality of possible positions fixedly predetermined by the position of the locking means on the guide rail as a result of resilient or snap-action cooperation of the locking and counter-locking means.

2. Installation boxes according to claim 1, characterized in that the recesses in the form of cable holes (6, 7; 134-137) in the bottom of the installation boxes (1, 131) form the counter-locking means.

3. Installation boxes according to claim 1 or 2, characterized in that on the guide rail (3, 13, 27) at regular intervals corresponding to a possible centre-to-centre distance between adjacent installation boxes (1) is provided at least one resiliently outwardly bendable extension (4, 15, 16, 24, 25, 132, 133) having a hook-shaped head end.

4. Installation boxes according to claim 2 or 3, characterized in that on the guide rail (130) for each installation box (131) is provided a pair of extensions (132, 133) for engagement in a pair of cable holes (134, 135) and in the bottom (138) of the installation boxes (131) are in each case provided two pairs of cable holes (134, 135; 136, 137) in such a way that the connecting line between the cable holes (134, 35) of a pair forms an angle of 90° to that of the other pair (136, 137).

5. Installation boxes according to one of the claims 2 to 4, characterized in that the cable holes (134-137) can be broken out along weakening lines (139) present in the bottom (138) of the installation boxes (131).

6. Installation boxes according to claim 5, characterized in that the weakening lines are formed by grooves (139) provided on the outside of the bottom (138) of the installation boxes (131), the extensions (132, 133) of the guide rail (130) having a head end, whose outer, all-round boundary edge is shaped corresponding to the configuration of the weakening line.

7. Installation boxes according to claim 6, characterized in that the head end of the extensions (132, 133) has a punching tool-like edge (140) directed away from the extension and which is insertable in a groove (139) forming a weakening line of the installation box (131).

8. Installation box according to one of the claims 2 to 7, characterized in that the extensions (132, 133) of the guide rail (130) have a head end shaped in accordance with the shape of the cable holes (134, 137) and which is undercut in hook-like manner on one side.

9. Installation boxes according to one of the claims 1 to 8, characterized in that the guide rail (130) has a U-shaped cross-section and predetermined breaking points (144, 145).

10. Installation box according to claim 9, characterized in that the predetermined breaking points of the guide rail (130) are formed by weakening grooves (146, 147) and on the inside of the rail profile are provided deeper weakening grooves and on its outside less deep weakening grooves with a V-shaped cross-section.

11. Installation boxes according to claim 1 or 3, characterized in that for the optional engagement of locking means (15, 16) provided on the guide rail (3, 13) in the bottom (19) of the installation boxes (1′) several counterlocking means in the form of recesses (21, 22) are juxtaposed.

12. Installation boxes according to one of the claims 1 to 3, characterized in that the locking means (24′, 25′, 4′, 5′, 4˝, 5˝) provided on the guide rail (27, 94, 112) and projecting therefrom are shaped onto a coupling device (28, 92, 110) detachably connected thereto and adjustably fixed in the rail longitudinal direction.

13. Installation boxes according to one of the claims 1, 2, 3, 11 or 12, characterized in that in the guide rail (2, 7, 52, 60, 66, 72) are provided numerous, row-like following recesses (30, 53, 61, 67, 73, 82, 98, 113, 114) for the optional engagement of locking means (58, 59, 64, 75, 76) or arresting means (29, 55, 89, 90, 97, 108, 115, 116).

14. Installation boxes according to claim 12, characterized in that the coupling device comprises a coupling slide (92, 110) guided on the guide rail (94, 112).

15. Installation box according to claim 13, characterized in that on the installation boxes (1′′′′′′) is shaped a rail guide (80) with resilient locking means (89, 90) for the arresting engagement in at least one recess of a row of recesses (82).

16. Installation boxes according to claim 13, characterized in that locking means (75, 76) provided on the installation boxes (1) are shaped on a coupling device (77) detachably connected thereto.

17. Installation boxes according to claim 1, characterized in that the locking means (46, 47, 58, 59, 67-70) or counterlocking means (34, 35) provided on the installation boxes (1˝, 1‴, 1′′′′, 1′′′′′) are arranged pairwise on the circumferential area of the box bottom (32, 45, 57, 63), so that by a rotary movement they can be secured on the guide rail (27, 52, 60, 66).

## Revendications

1. Boîtes encastrées pour installations électriques, avec un rail directionnel reliant les boîtes, des moyens d'encliquetage et de contre-encliquetage pour la liaison réglable entre les boîtes et le rail directionnel étant prévus sur chaque boîte (1, 131) et sur le rail directionnel (3, 13, 27, 52, 60, 66, 72, 81, 94, 105, 112, 130), caractérisées en ce que le rail directionnel (3, 13, 27, 52, 60, 66, 72, 81, 94, 105, 112, 130) présente en direction longitudinale au moins une série de moyens d'encliquetage disposés à des distances uniformes, de sorte que le verrouillage des boîtes encastrées sur le rail directionnel a lieu, dans un grand nombre de positions possibles découlant des positions de consigne prévus pour les moyens d'encliquetage sur le rail directionnel, par la coopération élastique ou d'enclenchement entre les moyens d'encliquetage et de contre-encliquetage.

2. Boîtes encastrées suivant la revendication 1, caractérisées en ce que des évidements sous forme d'orifices pour câbles (6, 7; 134-137) prévus dans la base des boîtes encastrées (1, 131) constituent les moyens de contre-encliquetage.

3. Boîtes encastrées suivant la revendication 1 ou la revendication 2, caractérisées en ce que sur le rail directionnel (3, 13, 27), à des distances uniformes correspondant à une distance possible entre les centres de boîtes encastrées (1) voisines, est prévu au moins un prolongement à flexibilité élastique (4, 15, 16, 24, 25, 132, 133) avec une tête en forme de crochet.

4. Boîtes encastrées suivant la revendication 2 ou la revendication 3, caractérisées en ce que sur le rail directionnel (130) il est prévu, pour chaque boîte encastrée (131), une paire de prolongements (132, 133) pour l'engagement dans une paire d'orifices pour câble (134, 135), tandis que dans la base (138) des boîtes encastrées (131) sont prévues deux paires d'orifices pour câble (134, 135; 136, 137) de manière telle que la ligne de jonction entre les orifices pour câble (134, 135) d'une paire fait un angle de 90° avec la ligne de jonction de l'autre paire (136, 137).

5. Boîtes encastrées suivant l'une quelconque des revendications de 2 à 4, caractérisée en ce que les orifices pour câble (134-137) peuvent être brisés le long des lignes d'affaiblissement (139) présentes dans la base (138) des boîtes encastrées (131).

6. Boîtes encastrées suivant la revendication 5, caractérisées en ce que en ce que les lignes d'affaiblissement sont constituées par des rainures (139) prévues sur la face extérieure de la base (138) des boîtes encastrées (131), les prolongements (132, 133) du rail directionnel (130) présentant une extrémité de tête dont l'arête de délimitation extérieure périphérique est formée conformément à l'allure de la ligne d'affaiblissement.

7. Boites encastrées suivant la revendication 6, caractérisée en ce que l'extrémité de tête des prolongements (132,133) présente un rebord (140) en forme de couteau d'estampage qui est issu du prolongement rebord qui peut être placé dans une rainure (139) constituant une ligne d'affaiblissement de la boite encastrée (131).

8. Boîtes encastrées suivant l'une quelconque des revendications de 2 à 7, caractérisées en ce que les prolongements (132, 133) du rail directionnel (130) présentent une extrémité de tête dont la forme correspond à la forme des orifices pour câble (134-137), extrémité de tête qui d'un côté est en dépouille en forme de crochet.

9. Boîtes encastrées suivant l'une quelconque des revendications de 1 à 8, caractérisées en ce que le rail directionnel (130) a une section transversale en forme de U, et présente des points de rupture de consigne (144, 145).

10. Boîtes encastrées suivant la revendication 9, caractérisées en ce que les points de rupture de consigne du rail directionnel (130) sont constituées par des rainures d'affaiblissement (146, 147), des rainures d'affaiblissement à section en forme de v plus profondes étant prévues à la face intérieure du profil du rail et des rainures d'affaiblissement à section en forme de v moins profondes étant prévues à la face extérieure du profil du rail.

11. Boîtes encastrées suivant la revendication 1 ou la revendication 3, caractérisées en ce que pour l'engagement à volonté de moyens d'encliquetage (15, 16) prévus sur le rail directionnel (3, 13), plusieurs moyens de contre-encliquetage sous forme d'évidements (21, 22) sont disposés côte à côte dans la base (19) des boîtes encastrées (1′).

12. Boîtes encastrées suivant l'une quelconque des revendications de 1 à 3, caractérisées en ce que les moyens d'encliquetage (24′, 25′, 4′, 5′, 4˝, 5˝) prévus sur le rail directionnel (27, 94, 112) et qui sont issus de ce rail sont formés sur un dispositif de couplage (28, 92, 110) relié de manière amovible au rail et pouvant être verrouillé de manière réglable en direction longitudinale du rail.

13. Boîtes encastrées suivant l'une quelconque des revendications 1, 2, 3, 11 ou 12, caractérisées en ce que sur le rail directionnel (2, 27, 52, 60, 66, 72) sont prévus en série de nombreux évidements (30, 53, 61, 67, 73, 82, 98, 113, 114) pour l'engagement à volonté de moyens d'encliquetage (58, 59, 64, 75, 76) ou de moyens d'arrêt (29, 55, 89, 90, 97, 108, 115).

14. Boîtes encastrées suivant la revendication 12, caractérisées en ce que le dispositif de couplage est constitué par un coulisseau de couplage (92, 114) guidé sur le rail directionnel (94, 112).

15. Boîte encastrée suivant la revendication 13, caractérisée en ce que sur les boîtes encastrées (1′′′′′′) est formé un guidage de rail (80) avec des moyens d'encliquetage élastiques (89, 90) pour l'engagement d'arrêt dans au moins un évidement d'une série d'évidements (82).

16. Boîtes encastrées suivant la revendication 13, caractérisées en ce que des moyens d'encliquetage (75, 76) prévues sur les boîtes encastrées (1) sont formés sur un dispositif de couplage (77) relié de manière amovible à la boîte.

17. Boîtes encastrées suivant la revendication 1, caractérisées en ce que les moyens d'encliquetage (46, 47, 58, 59, 67-70) ou de contre-encliquetage (34, 35) prévus sur les boites encastrées (1˝, 1‴, 1′′′′, 1′′′′′) sont disposés par paires dans la région périphérique de la base de la boîte (32, 45, 57, 63), de sorte que par un mouvement rotatif ils peuvent être encliquetés sur le rail directionnel (27, 52, 60, 66).
